# EUROPEAN PATENT APPLICATION

(11) **EP 2 781 170 A1**
(43) Date of publication of application: **24.09.2014**
(21) Application number: 13165498.0
(22) Date of filing: 26.04.2013
(51) Int. Cl.: A47C 4/44, A47C 9/10, F16B 7/10, F16B 7/18, A47C 4/28

(54) **Cross retractable structure**

(30) Priority: 19.03.2013 CN 201310089409
(71) Applicant: Zhejiang Hengfeng Top Leisure Co., Ltd., Zhejiang 313200 (CN)
(72) Inventor: Yang, Baoqing, 313200 Hangzhou Zhejiang (CN)
(74) Representative: Eisenführ Speiser

(57) **Abstract**

A cross retractable structure includes two mounting bases 1, 2 articulated with each other. The two mounting bases 1, 2 are hollow and provided thereon oppositely with a first 6 and second tube 7 mounting part with coincident center lines. The first 6 and second 7 tube mounting parts and the inner cavity of each of the mounting bases form a tube passage. A first tube 5 is mounted on the first tube mounting part 6 in such a manner as to be slidable in the tube passage, and a second tube 4 with an inner diameter not less than an outer diameter of the first tube 5 is fixedly arranged on the second tube mounting part 7. This cross retractable structure may not only be closed into a line-shaped structure, but also be further retracted by pushing the first tube 5 into the inner cavity of the second tube 4. Thus, the cross retractable structure is easier to carry.

## Description

### FIELD OF THE INVENTION

The present application relates to the technical field of compact outdoor portable devices, and specifically, to a cross retractable structure applied in compact outdoor portable devices.

### BACKGROUND OF THE INVENTION

Cross structures are widely used in many compact outdoor devices. Since cross structures themselves occupy relatively large spaces, they are inconvenient to be carried outdoors. To be carried easily, most existing cross structures are generally configured as a movable structure which may be closed into a line, i.e., the two poles forming the cross structures are overlapped.

Though in the existing cross structure, the two poles crossed with each other may be overlapped in a line, if poles forming the cross structure have a big length, the cross structure still exhibits a relatively large volume even after being overlapped in a line and is inconvenient to be carried outdoors.

Thus, it is an urgent technical problem to be solved by the person skilled in the art to provide a cross retractable structure which may be further reduced in the volume and thus may be carried outdoors with ease.

### SUMMARY OF THE INVENTION

In view of this, an object of the present application is to provide a cross retractable structure which may have a reduced volume to be carried with ease compared with the conventional cross retractable structure available currently in the market.

To solve the above technical problems, the cross retractable structure according to the present application includes two mounting bases articulated with each other. Specifically, each of the two mounting bases is hollow, and is provide thereon oppositely with a first tube mounting part and a second tube mounting part with coincident center lines. The first tube mounting part and the second tube mounting part together with the inner cavity of each of the mounting bases form a tube passage. A first tube is mounted on the first tube mounting part in such a manner as to be slidable in the tube passage, and a second tube with an inner diameter not less than an outer diameter of the first tube is fixedly arranged on the second tube mounting part.

Preferably, the surfaces in contact with each other of the two mounting bases are each provided with an accommodation groove communicated with the inner cavity of the respective mounting bases, and each of the mounting bases is provided with a passage blocking plate insertable into the accommodation groove of the other mounting base. The passage blocking plates are rotatable along the respective accommodation grooves and are capable of synchronously blocking or keeping clear of the tube passages of the mounting bases into which the two passage blocking plates are inserted respectively.

Preferably, the passage blocking plate is an arc protrusion arranged on the corresponding mounting base. The central angle corresponding to the arc protrusion corresponding is not bigger than 90°, and a symmetrical plane of the arc protrusion is perpendicular to a center line of the tube passage. The accommodation groove is an arc notch extending from one end oppositely towards the other end of the arc protrusion, the arc notch extending through the tube passage and the arc protrusion are concyclic.

Preferably, the central angle corresponding to the arc protruding is 90°, and a central angle corresponding to the arc notch is 180°.

Preferably, the cross retractable structure further includes a guide sleeve arranged at an end of the first tube extending into the first tube mounting part, with a guide tapered surface being provided at the front end of the guide sleeve.

Preferably, a circular articulating boss is further provided on one of the two mounting bases, and an articulating annular groove fitted with the articulating boss is provided on the other mounting base. The articulating boss is inserted into the articulating annular groove to achieve articulation with an articulating member.

Preferably, holes for connecting components are provided at the ends of the first tube and the second tube exposed to the outside of the mounting bases.

Preferably, the second tube and the second tube mounting part are threadingly connected.

As can be known from the above technical solutions, in the cross retractable structure according to the present application, the two mounting bases articulated with each other are hollow, and are each provided thereon oppositely with a first tube mounting part and a second tube mounting part with coincident center lines. The first tube mounting part and the second tube mounting part together with the inner cavity of each of the mounting bases form a tube passage. A first tube is mounted on the first tube mounting part in such a manner as to be slidable in the tube passage, and a second tube with an inner diameter not less than an outer diameter of the first tube is fixedly arranged on the second tube mounting part. Compared with the prior art, this cross retractable structure may not only be closed into a line-shaped structure, but also be further retracted by pushing the first tube from the first tube mounting part through the tube passage into the inner cavity of the second tube (that is, the first tube is inserted into the second tube) after the two mounting bases each provided with the first tube mounting part and the second tube mounting part are closed into a line-shaped structure. In application, the first tube is pulled out from the interior of the second tube, and the two mounting bases are rotated relative to each other by a suitable degree, thereby forming the cross structure again. Therefore, it shows that the cross retractable structure according to the present application may be further reduced in volume when being retracted so as to be easier to carry.

### BRIEF DESCRIPTION OF THE DRAWINGS

Figure 1 is a schematic exploded view of a cross retractable structure according to embodiments of the present application;

Figure 2 is a schematic overall view of the cross retractable structure in a deployed state according to embodiments of the present application;

Figure 3 is a schematic vertical sectional view of the cross retractable structure as shown in Figure 2;

Figure 4 is a schematic horizontal sectional view of the cross retractable structure as shown in Figure 2;

Figure 5 is a schematic overall view of the cross retractable structure in a closed state according to embodiments of the present application;

Figure 6 is a schematic vertical sectional view of the cross retractable structure as shown in Figure 5;

Figure 7 is a schematic horizontal sectional view of the cross retractable structure as shown in Figure 5;

Figure 8 is a schematic view of the cross retractable structure in a retracted state according to embodiments of the present application;

Figure 9 is a schematic vertical sectional view of the cross retractable structure in the retracted state according to embodiments of the present application; and

Figure 10 is a schematic horizontal sectional view of the cross retractable structure in the retracted state according to embodiments of the present application.

### DETAILED DESCRIPTION OF THE INVENTION

An object of the present application is to provide a cross retractable structure, in which tubes with different diameters are provided at two sides of a mounting base, so that after being closed in a line, the cross retractable structure may be further retracted by inserting the tube with smaller diameter into the tube with bigger diameter, resulting in a smaller overall volume and the convenience of carry.

In order that the person skilled in the art can better understand the solutions of the present application, hereinafter, the present application will be further described in detail in conjunction with the accompanying drawings and embodiments.

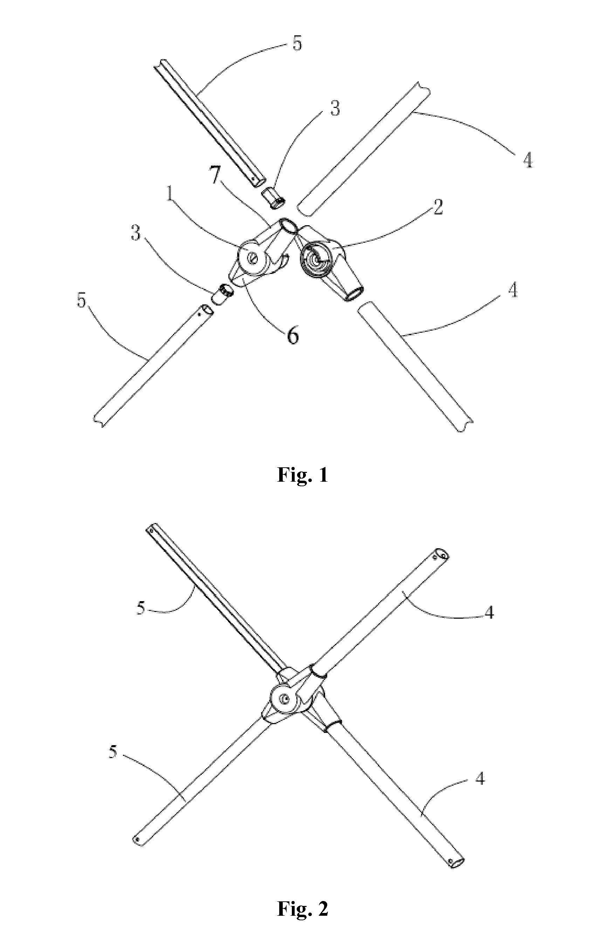

Please refer to Figure 1, which is a schematic exploded view of a cross retractable structure according to embodiments of the present application.

The cross retractable structure according to the present application is primarily used in compact outdoor devices. Specifically, the cross retractable structure includes two mounting bases articulated with each other, i.e., a mounting base 1 and a mounting base 2 which are hollow. Two tube mounting parts, i.e., a first tube mounting part 6 and a second tube mounting part 7, are oppositely provided on each of the mounting base 1 and the mounting base 2. The center lines of the first tube mounting part 6 and the second tube mounting part 7 on each mounting base are coincident with each other. Specifically, the inner diameter of the first tube mounting part 6 is smaller than that of the second tube mounting part 7. The inner cavity of each of the mounting bases together with the first tube mounting part 6 and the second tube mounting part 7 arranged on the mounting base forms a tube passage. A first tube 5 is slidably mounted on the first tube mounting part 6 on each of the mounting bases and is freely slidable in the tube passage. A second tube 4 is fixedly arranged on the second tube mounting part 7, and has an inner diameter not less than the outer diameter of the first tube 5, so that the first tube 5 may be inserted into the second tube 4 through the tube passage when being retracted.

Compared with the prior art, this cross retractable structure may not only be closed into a line-shaped structure, but also be further retracted by pushing the first tube 5 from the first tube mounting part 6 through the tube passage into the inner cavity of the second tube 4 (that is, the first tube 5 is inserted into the second tube 4) after the two mounting bases each provided with the first tube mounting part 6 and the second tube mounting part 7 are closed into a line-shaped structure. In application, the first tube 5 is pulled out from the interior of the second tube 4, and the two mounting bases are rotated relative to each other by a suitable degree, thereby forming the cross structure again. Therefore, it shows that the cross retractable structure according to the present application may be further reduced in volume when being retracted so as to be easier to carry.

To further optimize the technical solutions in the above embodiment, the surfaces of the mounting base 1 and the mounting base 2 contacting with each other are each provided with an accommodation groove 10 communicated with the inner cavity of the corresponding mounting base, and each of the mounting bases is provided with a passage blocking plate 9 insertable into the accommodation groove of the other mounting base. The passage blocking plate 9 is rotatable along the accommodation groove 10. The two passage blocking plates 9 may synchronously block or keep clear of the tube passages of the mounting bases into which the two passage blocking plates 9 are inserted respectively.

With such arrangement, the tube passage is blocked by the passage blocking plate when the cross angle of the cross structure is within a certain range. At this moment, the first tube 5 cannot pass through the tube passage into the second tube 4, thereby preventing the unexpected retraction of the cross retractable structure under impact or external forces. When the cross angle of the cross retractable structure is out of this range, the passage blocking plate 9 will be rotated to another position of the accommodation groove 10, so as to keep clear of the tube passage in the mounting base, thereby allowing the first tube 5 to be received in the second tube 4. Thus, the cross structure is retracted completely.

More specifically, the passage blocking plate 9 in the present embodiment is constituted by an arc protrusion provided on the mounting base. The central angle corresponding to the arc protrusion is preferably not bigger than 90°, and the symmetrical plane of the arc protrusion is perpendicular to the center line of the tube passage. The symmetrical plane is also the longitudinal section of the arc protrusion, i.e., the arc protrusion is located at a side of the tube passage of the mounting base on which the arc protrusion is located. The accommodation groove 10 is an arc notch extending from one end oppositely towards the other end of the arc protrusion. The arc notch passing through the tube passage and the arc protrusion are concyclic. As a result, the arc protrusion may be rotatable in the corresponding arc notch.

Still further, in order that the cross structure may be self-positioned when crossing at 0° and 90°, the arc protrusion in the embodiment is preferably a quarter of a circular arc, i.e., the central angle corresponding to the arc protrusion is 90°, and the central angle corresponding to the arc notch is preferably 180°. Since the arc notch and the arc protrusion are concyclic, the arc protrusion is freely rotatable in the arc notch, and may be self-positioned when the cross structure is crossed in a character "+" shape or is closed in a line shape.

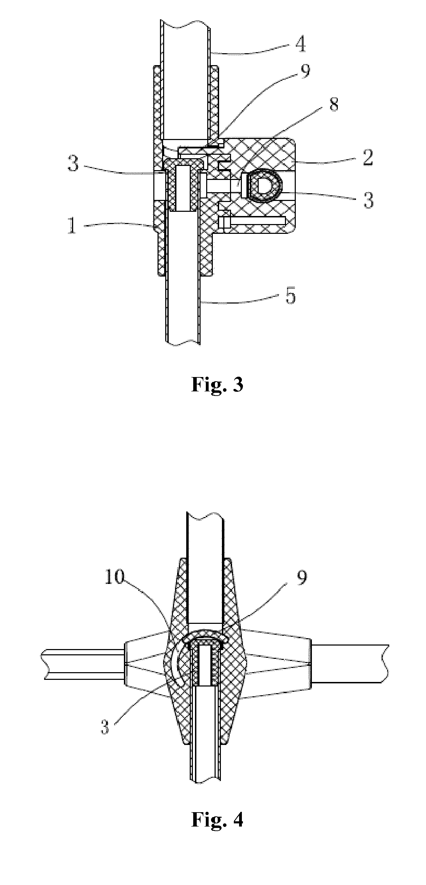

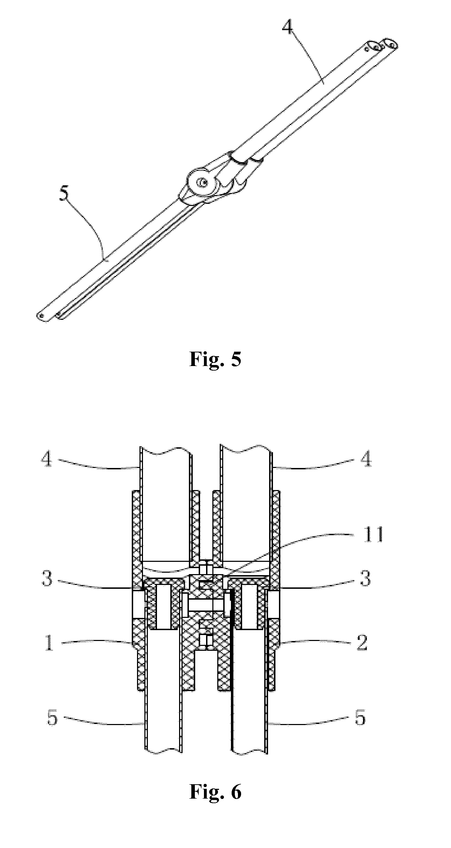

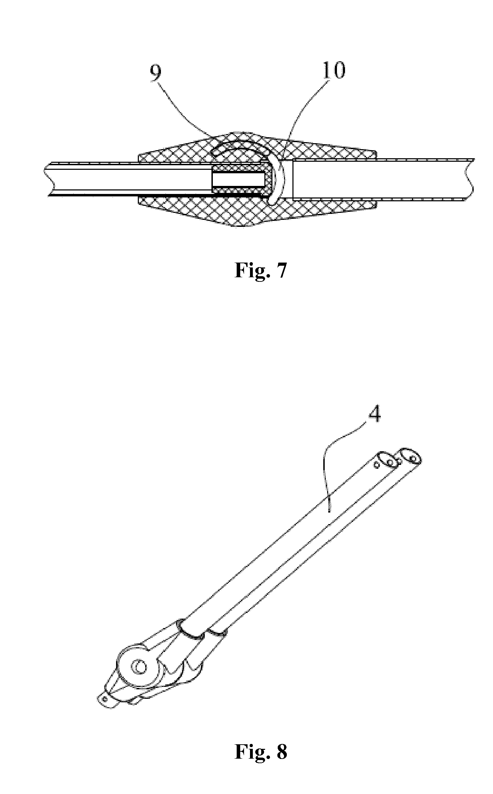

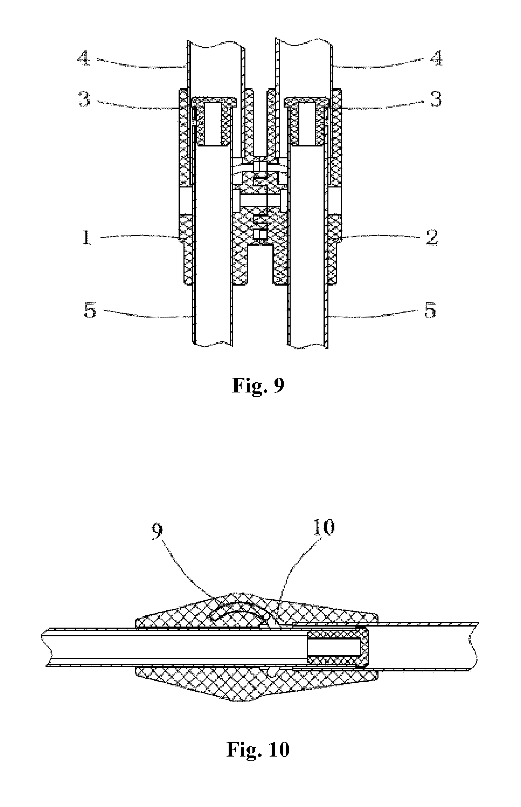

Referring to Figures 1 to 10, when the cross structure is crossed in a character "+" shape as shown in Figure 2, the arc protrusion just blocks the tube passage in the mounting base. As shown in Figures 3 and 4, at this time, the first tube 5 cannot pass through the tube passage and be inserted into the second tube 4 so as to prevent effectively the unexpected retraction of the cross structure, and the arc protrusions in the mounting base 1 and the mounting base 2 exactly contact with each other, so that the cross structure cannot be deployed anymore. As shown in the schematic exploded view in figure 1, in that case, the cross angle between the two first tubes 5 or the two second tubes 4 on the two mounting bases of the cross structure reaches its maximum value. When the cross structure is closed in a line shape as shown in Figure 5, the arc protrusion entirely enters the interior of the arc notch, and one end of the arc protrusion is just rotated to the terminal end of the arc notch, and cannot be further rotated. At this time, the arc protrusion has kept clear of the tube passage in the mounting base. As shown in Figures 6 and 7, the first tube 5 may be pushed into the inner cavity of the second tube 4 directly through the tube passage, thereby retracting the cross structure. The schematic structural view of the cross structure in a retracted state is shown in Figure 8. During retraction, the first tube 5 passes through the tube passage in the mounting base and is received in the second tube 4, and when having been retracted completely, the cross retractable structure may also be self-positioned since the first tube 5 extends through the tube passage so that the arc protrusion cannot rotate to the position exactly blocking the tube passage, i.e., the cross retractable structure cannot be deployed. Only when the first tube 5 is pulled out of the second tube 4, the cross retractable structure can be deployed. Thus, in the retracted state, the first tube 5 extending through the tube passage may effectively prevent the unexpected deployment of the cross retractable structure, as shown in Figures 9 and 1.

In order that the first tube 5 can be inserted into the second tube 4 conveniently, a guide sleeve 3 is further provided at an end of the first tube 5 extending into the first tube mounting part 6 in the present embodiment. A guide tapered surface is provided at the front end of the guide sleeve 3. The front end of the guide sleeve 3 in the present embodiment should be interpreted as the end of the guide sleeve 3 firstly entering the second tube 4 during retraction.

In order that the mounting base 1 and the mounting base 2 can be articulated stably, in the embodiment, a circular articulating boss 11 is further provided on one of the two mounting bases. Correspondingly, an articulating annular groove fitted with the articulating boss is provided on the other mounting base. The articulating boss 11 is inserted into the articulating annular groove to articulate the mounting base 1 and the mounting base 2 together with an articulating member 8. The cross retractable structure provided in Figures 3, 6 and 9 is provided with an articulating annular groove on the mounting base 1, and an articulating boss 11 on the mounting base 2, and uses the articulating member 8 to articulate the two mounting bases.

In order to facilitate the cross retractable structure to be fitted with other devices or components, in the present embodiment, holes for connecting components are preferably provided at the ends of the first tube 5 and the second tube 4 exposed to the outside of the mounting bases.

In order that the components are replaceable, the second tube 4 and the second tube mounting part 7 are threadingly connected in the embodiment. Thus, the second tube 4 damaged may be replaced, and the other undamaged parts may be used continually.

The cross retractable structure according to the present application is described in detail above. Herein, the specific examples are used to elaborate the principle and implementation of the present application. The description of the above embodiments only assists in understanding the method and the core spirit of the present application. It should be noted that various improvements and modifications can be made to the present application by the person skilled in the art without departing from the principle of the present application, and all those improvements and modifications fall into the protection scope of the claims of the present application.

## Claims

1. A cross retractable structure, comprising two mounting bases articulated with each other, wherein each of the two mounting bases is hollow, and is provide thereon oppositely with a first tube mounting part and a second tube mounting part with coincident center lines,
the first tube mounting part and the second tube mounting part together with an inner cavity of each of the mounting bases form a tube passage,
a first tube is mounted on the first tube mounting part in such a manner as to be slidable in the tube passage, and a second tube with an inner diameter not less than an outer diameter of the first tube is fixedly arranged on the second tube mounting part.

2. The cross retractable structure according to claim 1, wherein surfaces in contact with each other of the two mounting bases are each provided with an accommodation groove communicated with the inner cavity of the respective mounting bases, and each of the mounting bases is provided with a passage blocking plate insertable into the accommodation groove of the other mounting base,
the passage blocking plates are rotatable along the respective accommodation grooves and are capable of synchronously blocking or keeping clear of the tube passages of the mounting bases into which the two passage blocking plates are inserted respectively.

3. The cross retractable structure according to claim 2, wherein the passage blocking plate is an arc protrusion arranged on the corresponding mounting base, a central angle corresponding to the arc protrusion corresponding is not bigger than 90°, and a symmetrical plane of the arc protrusion is perpendicular to a center line of the tube passage,
the accommodation groove is an arc notch extending from one end oppositely towards the other end of the arc protrusion, the arc notch extending through the tube passage and the arc protrusion are concyclic.

4. The cross retractable structure according to claim 3, wherein the central angle corresponding to the arc protruding is 90°, and a central angle corresponding to the arc notch is 180°.

5. The cross retractable structure according to any one of claims 1 to 4, further comprising a guide sleeve arranged at an end of the first tube extending into the first tube mounting part, with a guide tapered surface being provided at a front end of the guide sleeve.

6. The cross retractable structure according to claim 1, wherein a circular articulating boss is further provided on one of the two mounting bases, and an articulating annular groove fitted with the articulating boss is provided on the other mounting base,
the articulating boss is inserted into the articulating annular groove to achieve articulation with an articulating member.

7. The cross retractable structure according to claim 1, wherein holes for connecting components are provided at ends of the first tube and the second tube exposed to the outside of the mounting bases.

8. The cross retractable structure according to claim 1, wherein the second tube and the second tube mounting part are threadingly connected.
